# EUROPEAN PATENT APPLICATION

(11) **EP 4 186 744 A1**
(43) Date of publication of application: **31.05.2023**
(21) Application number: 21383081.3
(22) Date of filing: 30.11.2021
(51) Int. Cl.: B60L 53/30, B60L 53/60, B60L 53/65, B60L 53/66

(54) **STARTING-UP A TARGET CHARGING POINT**

(71) Applicant: Ewall Energy S.L., 08028 Barcelona (ES)
(72) Inventor: QUEROL SASTRE, Joaquín, 08034 Barcelona (ES)
(74) Representative: ZBM Patents - Zea, Barlocci & Markvardsen

(57) **Abstract**

Methods are provided of starting-up a target charging point accessible through an access point to charge an electric vehicle, said methods being performable at (or by or from or through or by using) a mobile device. These methods comprise: obtaining access permission to access the target charging point through the access point; obtaining charging permission to charge the electric vehicle through (or by using) the target charging point; notifying presence of the electric vehicle at the access point to instruct the access point to open based on the obtained access permission; and notifying presence of the electric vehicle at the target charging point to instruct the target charging point to start-up based on the obtained charging permission. Systems, computing systems and computer programs suitable to perform said methods are also provided.

## Description

The present disclosure relates to methods performable at a mobile device of starting-up a target charging point accessible through an access point to charge an electric vehicle, and to computer programs, systems, and computing systems suitable for performing such methods.

### BACKGROUND

The deployment of the electric car as a standard means for travelling makes the deployment of an effective network of charging points essential. Currently there are two types of charging points: fast charging points, normally located in public places and with available powers between 22 and 350 KW, and private charging points, with charging powers between 3 and 22 KW and normally installed in private parkings. The latter are purchased and installed by individuals and their access and use is limited to the owner of the charger.

In recent years, the demand for private charging point has grown exponentially. Some known charging points are simple chargers with no other function or capacity than to convert the electrical signal from the network, either single-phase or three-phase, into a continuous voltage in the power range of 3 to approximately 22 kW. The user in this case has exclusive access to the charging point. And said charging point does not offer any extra service. Any vehicle that is plugged into the charging point is charged.

Other known chargers include further functions apart from charging function such as, e.g., communication and control functionalities. Despite these more advanced functionalities, access to these chargers is still limited to people closest to or very well known by the owner of the charger. Moreover, such chargers may be arranged at locations with no free access and, therefore, access to them is very limited.

An object of the present disclosure is to provide new methods, systems and computer programs aimed at improving prior art methods, systems and computer programs for starting-up a target charging point accessible through an access point to charge an electric vehicle.

### SUMMARY

In an aspect, methods are provided of starting-up a target charging point accessible through an access point to charge an electric vehicle, said methods being performable at (or by or from or through or by using) a mobile device. These methods (also denominated "starting-up methods" herein) comprise obtaining (at or by or through or by using the mobile device) access permission to access the target charging point through the access point, and obtaining (at or by or through or by using the mobile device) charging permission to charge the electric vehicle through the target charging point. Starting-up methods further comprise notifying (at or by or from or through or by using the mobile device) presence of the electric vehicle at the access point to instruct the access point to open based on the obtained access permission, and notifying (at or by or from or through or by using the mobile device) presence of the electric vehicle at the target charging point to instruct the target charging point to start-up based on the obtained charging permission. Starting-up methods according to present disclosure may be implemented by, e.g., an app installable or installed in or at the mobile device.

An advantage of the proposed starting-up methods is that any person may request permission to charge his or her electric vehicle and, once permission has been granted or accepted, pass through the access point to arrive at the target charging point to finally charge the vehicle using the target charging point. This manner, particular chargers can be made available to anybody and, accordingly, a very extensive network of chargers may be available to whole or big population of electric vehicles. This extensive network of charging points may be automatically shared (i.e. without human intervention) based on starting-up methods (and systems) disclosed herein. Granting or refusal of the access and charging permissions (including e.g. associated credentials) may be based on any known authorization and/or security techniques aimed at that. Once the target charging point has been determined as available to a given request, credentials associated to access and charging permissions may be obtained (at the mobile device) and accordingly used to provoke opening of the access point and subsequent starting-up (or activation or turning on) of the target charging point. Such credentials may be based on any known encoding, securing, keying, encrypting, etc. techniques to maximize security and reliability in terms of, e.g., ensuring that the person who has requested access and charging permissions is the same passing the access point and subsequently activating the target charging point.

The access permission and the charging permission may be obtained simultaneously, i.e. at same time, or separately, i.e. at different time, depending on e.g. existing conditions. For example, if the target charging point is at a location with no mobile Internet coverage (because e.g. it is arranged at an underground installation) the access and charging permissions may be obtained at same time before accessing the installation with no mobile Internet coverage. In another example, if there is mobile Internet connection in the installation where the access point and target charging point are arranged, an elapsing time between access and/or charging permission request and access and/or charging operation may be defined, respectively. In this case, access permission may be obtained in such a way that access operation has to be performed within predefined access elapsing time between access request and operation, and/or charging permission may be obtained in such a way that charging operation has to be initiated within predefined charging elapsing time between charging request and operation.

The access point may include an automatic door or barrier, and the notifying of the presence of the electric vehicle at the access point may accordingly include notifying the presence of the electric vehicle at the automatic door or barrier to instruct the automatic door or barrier to open based on the obtained access permission.

The notifying of the presence of the electric vehicle at the access point may include sending to the access point an opening signal based on the obtained access permission to instruct the access point to open or give access. In some examples, an activable user interface element may be displayed (at the mobile device) in such a way that the sending of the opening signal may be triggered (and hence performed) upon activation of said user interface element. In some implementations, a wireless linkage with the access point may be established in such a way that the sending of the opening signal may be performed through said wireless linkage. This wireless linkage may be automatically established (i.e. without human intervention) upon wireless identification of the mobile device by the access point, or vice versa. Alternatively to the sending of the opening signal (from the mobile device), an opening credential based on the obtained access permission may be displayed (at the mobile device) in such a way that said opening credential may be manually provided (by corresponding user) to the access point to instruct the access point to open.

The notifying of the presence of the electric vehicle at the target charging point may include sending to the target charging point a starting-up signal based on the obtained charging permission to instruct the target charging point to start-up or activate. In examples, an activable user interface item may be displayed (at the mobile device) in such a way that the sending of the starting-up signal may be triggered (and therefore performed) upon activation of said user interface item. In implementations, a wireless linkage with the target charging point may be established in such a way that the sending of the opening signal may be performed through said wireless linkage. This wireless linkage may be automatically established (i.e. without human intervention) upon wireless identification of the mobile device by the target charging point, or vice versa. Alternatively to the sending of the starting-up signal (from the mobile device), the target charging point may be automatically started-up (i.e. without human intervention) as a result of said automatic establishment of the wireless linkage (i.e. with no sending of a signal). Further alternatively, a starting-up credential based on the obtained charging permission may be displayed (at the mobile device) in such a way that said starting-up credential may be manually provided (by corresponding user) to the target charging point to instruct the target charging point to start-up or initiate its operation.

In some configurations, starting-up methods may further comprise displaying a plurality of selectable charging points, and receiving user input indicating selection of one of the selectable charging points as the target charging point. In particular, such a plurality of selectable charging points may be retrieved from a database of charging points at a remote server. An owner of a charging point may choose not sharing his/her charging point, in which case said charging point may be labelled as unavailable and, therefore, not appear as selectable charging point.

According to some implementations, the obtained charging permission may include an identifier of the target charging point in case that charging installation includes several charging points. This manner, the mobile device may be instructed to display such an identifier for the user to know unambiguously which of the chargers in the charging installation must use. Additionally or alternatively, a light may be activated on the target charging point when wireless linkage has been established between the mobile device and the target charging point, for example.

In a further aspect, computer programs are provided comprising program instructions for causing a system (or computing system) to perform methods of starting-up a target charging point accessible through an access point to charge an electric vehicle, such as the ones described in other parts of the disclosure. Such computer programs (also denominated "starting-up computer programs" herein) may be embodied on a storage medium and/or carried on a carrier signal.

In a still further aspect, computing systems are provided for starting-up a target charging point accessible through an access point to charge an electric vehicle, said computing systems (also denominated "starting-up computing systems" herein) being includable or included in a mobile device. Starting-up computing systems comprise a memory and a processor, embodying instructions stored in the memory and executable by the processor, and the instructions comprising functionality or functionalities to execute methods of starting-up a target charging point accessible through an access point to charge an electric vehicle, such as the ones described in other parts of the disclosure.

In a yet further aspect, systems are provided for starting-up a target charging point accessible through an access point to charge an electric vehicle, said systems being includable or included in a mobile device. These systems (also denominated "starting-up systems" herein) comprise an access-permission module, a charging-permission module, an opening module and a starting-up module. The access-permission module is configured to obtain access permission to access the target charging point through the access point. The charging-permission module is configured to obtain charging permission to charge the electric vehicle through (or by using) the target charging point. The opening module is configured to notify presence of the electric vehicle at the access point to instruct the access point to open based on the obtained access permission. The starting-up module is configured to notify presence of the electric vehicle at the target charging point to instruct the target charging point to start-up based on the obtained charging permission.

In some examples, mobile devices including a starting-up system or a starting-up computing system such as the ones described in other parts of the disclosure may be provided. Mobile device is a general term for any type of portable or handheld or easily transportable computing system. Examples of mobile devices may be, e.g., Smartphones, Tablets, Laptop computers, Smart watches, E-readers, Handheld gaming consoles, etc. Any computing device integrated or installed in or at the vehicle (to be charged) is also considered herein as a mobile device, since it is carried or (easily) transported by the vehicle which is a movable or moving entity.

### BRIEF DESCRIPTION OF THE DRAWINGS

Non-limiting examples of the present disclosure will be described in the following, with reference to the appended drawings, in which:
Figure 1 shows a schematic representation of systems includable or included in a mobile device for starting-up a target charging point accessible through an access point to charge an electric vehicle, according to examples.
Figure 2 is a flow chart schematically illustrating methods performable at a mobile device of starting-up a target charging point accessible through an access point to charge an electric vehicle, according to examples.

### DETAILED DESCRIPTION OF EXAMPLES

In these figures the same reference signs may be used to designate or indicate same or similar elements.

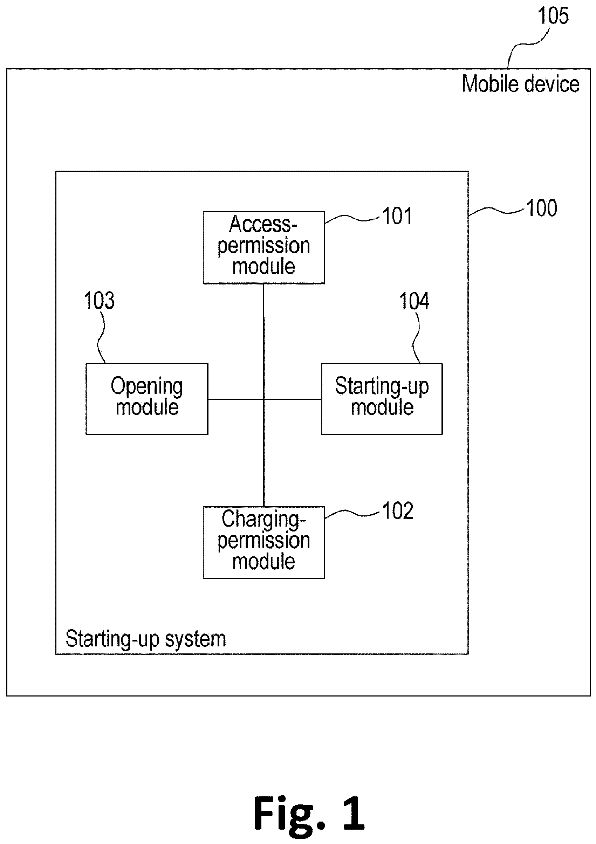

Figure 1 illustrate starting-up systems 100 includable or included in a mobile device 105 for starting-up a target charging point accessible through an access point to charge an electric vehicle. These starting-up systems 100 may be configured to perform starting-up methods such as the ones described in other parts of the disclosure.

Starting-up systems 100 may comprise an access-permission module 101, a charging-permission module 102, an opening module 103 and a starting-up module 104. The access-permission module 101 may be configured to obtain access permission to access the target charging point through the access point. The charging-permission module 102 may be configured to obtain charging permission to charge the electric vehicle through or by using the target charging point. The opening module 103 may be configured to notify presence of the electric vehicle at the access point to instruct the access point to open based on the obtained access permission. The starting-up module 104 may be configured to notify presence of the electric vehicle at the target charging point to instruct the target charging point to start-up based on the obtained charging permission.

The access point may include, e.g., a communication module, a controller, a relay, etc. The communication module of the access point may be configured to wirelessly interact with the opening module 103 of the starting-up system 100. This interaction may implement the notifying of the presence of the electric vehicle to the access point so that the access point is accordingly instructed to open. This interaction may be bluetooth based. The relay of the access point may be activable through bluetooth and, once activated, configured to open the access point (e.g. corresponding automatic door or barrier) such that the vehicle gains access or is permitted to access the charging point.

The charging point may include, e.g., a communication module, a controller, an AC/DC converter, etc. The communication module of the charging point may be configured to wirelessly interact with the starting-up module 104 of the starting-up system 100. This interaction may implement the notifying of the presence of the electric vehicle to the charging point so that the charging point is accordingly instructed to start-up or activate the AC/DC converter. This interaction may be bluetooth based. Activation of the AC/DC converter may cause the AC/DC converter to supply DC current to charge the vehicle.

Access-permission module 101 and charging-permission module 102 may obtain access permission and charging permission respectively by, e.g., sending a permission request to a controller, such as the one(s) cited before, associated to the access point and/or the target charging point. Such a controller may be a single controller configured to control both the target charging point and the access point or, alternatively, each of the target charging point and the access point may have its own associated controller. In case of different controllers, they may cooperate to give proper response to the access-permission module 101 and the charging-permission module 101. The controller may receive access permission request and/or charging permission request and, e.g., check availability of the target charging point and respond accordingly.

Access-permission module 101 and charging-permission module 102 may receive (at same or different time) respective response from the controller (associated to the target charging point and/or the access point) which may include access and charging permission granted or refused. In case of permission refused, starting-up method implemented by the starting-up system 100 may terminate. In case of permission granted or accepted, access-permission module 101 and charging-permission module 101 may store (at same or different time) necessary data to continue the execution of the starting-up method. The access permission request and charging permission request may include, e.g., a time period that the target charging point is to be used or any other requirement related to the use of the target charging point and associated access point. The response(s) from the controller(s) may include, e.g., necessary data to provoke (from or by using the mobile device 105) opening of the access point and starting-up (or activation or turning on) of the target charging point. These necessary data may include, e.g., access credential data that may be transmissible from the mobile device 105 to the access point to instruct it to open. These necessary data may further include, e.g., charging credential data that may be transmissible from the mobile device 105 to the target charging point to instruct it to start-up (or initiate or turn on).

Once access permission including, e.g., access credential data has been obtained (or received) by the access-permission module 101, these access credential data may be used by the opening module 103 to send (from the mobile device 105) an opening signal based on the access credential data to the access point. This sending may use short range communications such as, e.g., RFID, NFC, Bluetooth, etc. since the electric vehicle and, therefore, its driver and user of the mobile device 105 are supposed to be at or near the access point. The opening signal may be or may include, e.g., the access credential data unmodified or suitably modified to be transmittable as a wireless signal or signals to the access point. Transmittable opening signal(s) may then be sent (from the mobile device 105) to the access point in such a way that it is ensured that the starting-up system 100 (in the mobile device 105) that previously obtained the permission is the same that is instructing the access point to open or give access. As commented before, any known technique with that or similar purpose may be used to authorise the mobile device 105 (and associated user) to open and pass the access point. The manner in which authorization is managed and/or transmitted is not an object of the present invention, so no further details about in this respect are provided herein.

In examples, the sending of the opening signal may include displaying at the mobile device 105 an activable user interface element (e.g. an opening button) which when activated (e.g. pushed) may trigger and therefore perform the sending of the opening signal. The sending of the opening signal may be performed through a wireless linkage between the mobile device 105 and the access point that has been established between the mobile device 105 and the access point. This establishing of the wireless linkage may be automatically performed when the mobile device 105 is proximate enough to the access point and accordingly detects a wireless transmitter/receiver of the access point.

Alternatively to the sending of the opening signal, the opening module 103 may instruct the mobile device 105 to display an opening credential based on e.g. the obtained access credential data, and this opening credential may be used by the user of the mobile device 105 to manually instruct the access point to open. The displayed opening credential may be or include, e.g., a numerical code to be inputted by the user into the access point through suitable input device (e.g. a keyboard), a bar code (e.g. a QR code) readable by a reader of the access point, etc. Any known data provision and data entry technique aimed at that may be used. Since the manner in which the opening credential may be provided and transferred by the user to the access point is not an object of the present disclosure, no more details in this respect are provided herein.

In some implementations, the access point may be or may include an automatic door or barrier such as, e.g., a parking automatic door or barrier. In this case, the wirelessly transmittable opening signal may satisfy necessary requirements of the automatic door or barrier in such a way that said transmission causes the automatic door or barrier to open or give access. The wirelessly transmittable opening signal may e.g. include or codify an opening instruction understandable and implementable by a controller of the access point (e.g. automatic door or barrier). This opening instruction may be e.g. customized to uniquely identify the mobile device 105 that previously obtained the permission, in order to ensure that the mobile device 105 that obtained the permission is the same as the mobile device 105 that is instructing the access point to open.

Once the access point has been surpassed by the vehicle, charging credential data (obtained by the charging permission module 102) may be used by the starting-up module 104 to send (from the mobile device 105) a starting-up signal based on the charging credential data to the target charging point. This sending may use short range communications such as, e.g., RFID, NFC, Bluetooth, etc. since the electric vehicle and, therefore, its driver and user of the mobile device 105 are supposed to be at or near the target charging point. The starting-up signal may be or may include, e.g., the charging credential data unmodified or suitably modified to be transmittable as a wireless signal or signals to the target charging point. Transmittable starting-up signal(s) may then be sent (from the mobile device 105) to the target charging point in such a way that it is ensured that the starting-up system (in the mobile device 105) that previously obtained the permission is the same that is instructing the target charging point to activate or start-up. As commented before, any known technique with said or similar purpose may be used to authorise the mobile device 105 and associated user to activate or start-up the target charging point. The manner in which authorization is managed and/or transmitted is not an object of the present invention, so no further details in this respect are provided herein.

In examples, the sending of the starting-up signal may include displaying at the mobile device 105 an activable user interface item (e.g. a starting-up button) which when activated (e.g. pushed) may trigger and therefore perform the sending of the starting-up signal. The sending of the starting-up signal may be performed through a wireless linkage between the mobile device 105 and the target charging point that has been established between the mobile device 105 and the target charging point. This establishing of the wireless linkage may be automatically performed when the mobile device 105 is proximate enough to the target charging point and accordingly detects a wireless transmitter/receiver of the target charging point.

Alternatively to the sending of the starting-up signal, the starting-up module 104 may instruct the mobile device 105 to display a starting-up credential based on e.g. the obtained charging credential data, and this starting-up credential may be used by the user of the mobile device 105 to manually instruct the target charging point to activate or start-up. The displayed starting-up credential may be or include, e.g., a numerical code to be inputted by the user into the target charging point through suitable input device (e.g. a keyboard), a bar code (e.g. a QR code) readable by a reader of the target charging point, etc. Any known data provision and data entry technique aimed at that may be used. Since the manner in which the starting-up credential may be provided and transferred by the user to the target charging point is not an object of the present disclosure, no more details in this respect are provided herein.

In implementations, the starting-up system 100 may further include a selection module (not shown) which may be configured to instruct the mobile device 105 to display a plurality of selectable charging points through user interface. Then the user of the mobile device 105 may properly interact with the user interface to select one of the displayed selectable charging points as the target charging point. Accordingly, the selection module may then receive the user input indicating the selected target charging point and the access-permission module 101 and/or the charging-permission module 102 may then determine whether it is available and accordingly grant (or refuse) the requested permission for using the selected target charging point. Selection module may retrieve the plurality of selectable charging points from e.g. a database of charging points which may reside at a remote server. This server may be dedicated to, e.g., keep said database up to date by marking each of the charging points as available or unavailable at given or predefined time slots depending on permissions already granted or accepted over whole network of charging points. Alternatively to this centralized control of charging points at the server, the starting-up system 100 may interact directly with known charging points to check their availability and accordingly obtain corresponding access permission at the access-permission module 101 and/or charging permission at the charging-permission module 102.

Once the charging has been completed, the starting-up system 100 may receive (at e.g. billing module, not shown) from the target charging point the power consumed by the charging operation and corresponding billing and payment operation(s) may be executed. In some examples, a pricing functionality may be provided configured to define charging price by owner of the charging point or by provider of a charger sharing platform formed by corresponding starting-up systems 100, access points, charging points, etc. Same or similar principles and features as those commented with respect to instruct the access point to open and the target charging point to start-up may be used to implement "reverse" operations. Such reverse operations may refer to those to be performed when the charging has been completed and, therefore, the installation where the target charging point is located is to be left by the charged vehicle. For example, when leaving the installation where the target charging point is located, the starting-up system 100 may provide a leaving functionality to open again the access point for the vehicle to leave the installation (e.g. parking).

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated, or linked to corresponding starting-up methods proposed herein, and/or to other components that may be local or remote to one another. Additionally, the modules may be moved from one device and added to another device, and/or may be included in both devices, associated to corresponding starting-up methods/systems proposed herein. Any software implementations may be tangibly embodied in one or more storage media, such as e.g. a memory device, a floppy disk, a compact disk (CD), a digital versatile disk (DVD), or other devices that may store computer code.

Starting-up systems according to present disclosure may be implemented by computing resources, electronic resources, or a combination thereof. The computing resources may be a series of instructions (e.g. a computer program) and then the starting-up systems may comprise a memory and a processor, embodying said series of instructions stored in the memory and executable by the processor. These instructions may comprise functionality or functionalities to execute corresponding starting-up methods such as e.g. the ones described in other parts of the disclosure.

In case the starting-up systems are implemented only by electronic resources, a controller of the system may be, for example, a CPLD (Complex Programmable Logic Device), an FPGA (Field Programmable Gate Array) or an ASIC (Application-Specific Integrated Circuit).

In case the starting-up systems are a combination of electronic and computing resources, the computing resources may be a series of instructions (e.g. a computer program) and the electronic resources may be any electronic circuit capable of implementing corresponding method-steps of the starting-up methods proposed herein, such as the ones described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing the starting-up methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other resources.

When the computer program(s) is/are embodied in a signal that may be conveyed directly by a cable or other device or resources, the carrier may be constituted by such cable or other device or resources. Alternatively, the carrier may be an integrated circuit in which the computer program(s) is/are embedded, the integrated circuit being adapted for performing, or for use in the performance of, the starting-up methods proposed herein.

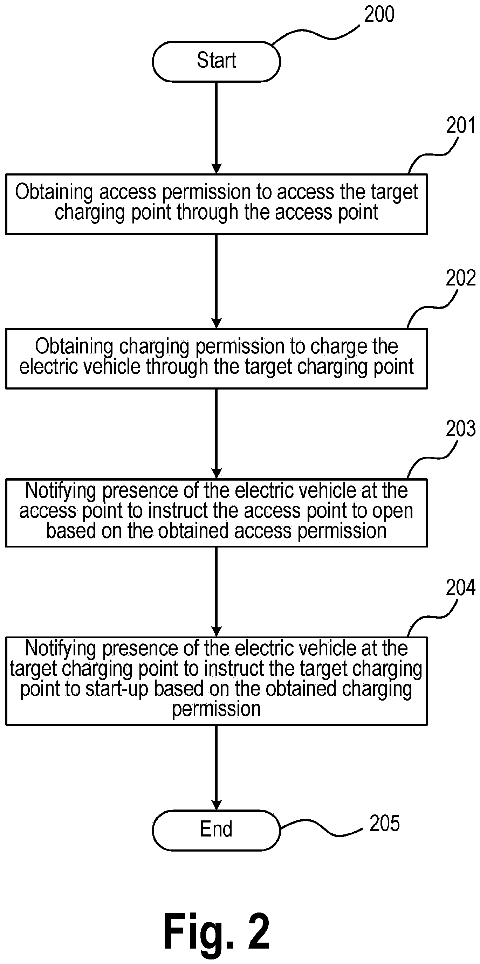

Figure 2 is a flow chart schematically illustrating methods performable at a mobile device of starting-up a target charging point accessible through an access point to charge an electric vehicle, according to examples. As generally shown in the figure, starting-up methods according to Figure 2 may be initiated (e.g. at method block 200) upon detection of a starting condition such as e.g. a user request to initiate the starting-up method, initiation of an application implementing the starting-up method, etc. Since starting-up methods according to Figure 2 are performable by starting-up systems according to Figure 1, number references from said Figure 1 may be reused in the following description of Figure 2.

Starting-up methods according to Figure 2 may further include (e.g. at method block 201) obtaining access permission to access the target charging point through the access point. Since this "access permission" functionality (implemented at e.g. method block 201) is performable by a module such as the access-permission module 101 of the starting-up system 100 of Figure 1, functional details and considerations previously explained with respect to said module 101 may be similarly attributed to method block 201.

Starting-up methods according to Figure 2 may further include (e.g. at method block 202) obtaining charging permission to charge the electric vehicle through the target charging point. Since this "charging permission" functionality (implemented at e.g. method block 202) is performable by a module such as the charging-permission module 102 of the starting-up system 100 of Figure 1, functional details and considerations previously explained with respect to said module 102 may be similarly attributed to method block 202.

Starting-up methods according to Figure 2 may further include (e.g. at method block 203) notifying presence of the electric vehicle at the access point to instruct the access point to open based on the obtained access permission. Since this "opening" functionality (implemented at e.g. method block 203) is performable by a module such as the opening module 103 of the starting-up system 100 of Figure 1, functional details and considerations previously explained with respect to said module 103 may be similarly attributed to method block 203.

Starting-up methods according to Figure 2 may still further include (e.g. at method block 204) notifying presence of the electric vehicle at the target charging point to instruct the target charging point to start-up (or activate or turn on) based on the obtained permission. Since this further "starting-up" functionality (implemented at e.g. method block 204) is performable by a module such as the starting-up module 104 of the starting-up system 100 of Figure 1, functional details and considerations previously explained with respect to said module 104 may be similarly attributed to method block 204.

Starting-up methods according to Figure 2 may yet further include (e.g. at method block 205) terminating execution of the starting-up method when e.g. an ending condition is detected. Such an ending condition may be determined by detecting e.g. a user request to terminate the starting-up method, ending of an application implementing the starting-up method, etc.

Although only a number of examples have been disclosed herein, other alternatives, modifications, uses and/or equivalents thereof are possible. All possible combinations of the described examples are thus also covered. The scope of the present disclosure should not be limited by particular examples but should be determined only by a fair reading of the claims that follow.

## Claims

1. Method performable at a mobile device of starting-up a target charging point accessible through an access point to charge an electric vehicle, the method comprising:
obtaining access permission to access the target charging point through the access point;
obtaining charging permission to charge the electric vehicle through the target charging point;
notifying presence of the electric vehicle at the access point to instruct the access point to open based on the obtained access permission; and
notifying presence of the electric vehicle at the target charging point to instruct the target charging point to start-up based on the obtained charging permission.

2. Method of starting-up a target charging point according to claim 1, wherein the access point includes an automatic door or barrier; and wherein the notifying of the presence of the electric vehicle at the access point includes
notifying the presence of the electric vehicle at the automatic door or barrier to instruct the automatic door or barrier to open based on the obtained access permission.

3. Method of starting-up a target charging point according to any of claims 1 or 2, wherein the notifying of the presence of the electric vehicle at the access point includes
sending to the access point an opening signal based on the obtained access permission to instruct the access point to open.

4. Method of starting-up a target charging point according to claim 3, wherein the sending of the opening signal includes
displaying an activable user interface element to perform the sending of the opening signal upon activation of said user interface element.

5. Method of starting-up a target charging point according to any of claims 3 or 4, wherein the sending of the opening signal includes
establishing a wireless linkage with the access point to perform the sending of the opening signal through said wireless linkage.

6. Method of starting-up a target charging point according to any of claims 1 or 2, wherein the notifying of the presence of the electric vehicle at the access point includes
displaying an opening credential based on the obtained access permission to be manually provided to the access point to instruct the access point to open.

7. Method of starting-up a target charging point according to any of claims 1 to 6, wherein the notifying of the presence of the electric vehicle at the target charging point includes
sending to the target charging point a starting-up signal based on the obtained charging permission to instruct the target charging point to start-up.

8. Method of starting-up a target charging point according to claim 7, wherein the sending of the starting-up signal includes
displaying an activable user interface item to perform the sending of the starting-up signal upon activation of said user interface item.

9. Method of starting-up a target charging point according to any of claims 7 or 8, wherein the sending of the starting-up signal includes
establishing a wireless linkage with the target charging point to perform the sending of the opening signal through said wireless linkage.

10. Method of starting-up a target charging point according to any of claims 1 to 6, wherein the notifying of the presence of the electric vehicle at the target charging point includes
displaying a starting-up credential based on the obtained charging permission to be manually provided to the target charging point to instruct the target charging point to start-up.

11. Method of starting-up a target charging point according to any of claims 1 to 10, further comprising
displaying a plurality of selectable charging points; and
receiving user input indicating selection of one of the selectable charging points as the target charging point.

12. Method of starting-up a target charging point according to claim 11, further comprising
retrieving the plurality of selectable charging points from a database of charging points at a remote server.

13. Computer program comprising program instructions for causing a system to perform a method according to any of claims 1 to 12 of starting-up a target charging point.

14. System includable in a mobile device for starting-up a target charging point accessible through an access point to charge an electric vehicle, the system comprising:
an access-permission module configured to obtain access permission to access the target charging point through the access point;
a charging-permission module configured to obtain charging permission to charge the electric vehicle through the target charging point;
an opening module configured to notify presence of the electric vehicle at the access point to instruct the access point to open based on the obtained access permission; and
a starting-up module configured to notify presence of the electric vehicle at the target charging point to instruct the target charging point to start-up based on the obtained charging permission.

15. Mobile device including a system according to claim 14 for starting-up a target charging point.
